**Europäisches Patentamt**

**European Patent Office**

**Office européen des brevets**

(11) Veröffentlichungsnummer: **0 355 246**

**A1**

## (12) EUROPÄISCHE PATENTANMELDUNG

(21) Anmeldenummer: **88890216.0**

(22) Anmeldetag: **25.08.88**

(51) Int. Cl.4: **F02M 31/16**

(43) Veröffentlichungstag der Anmeldung:
**28.02.90 Patentblatt 90/09**

(84) Benannte Vertragsstaaten:
**CH DE ES FR GB IT LI NL SE**

(71) Anmelder: **van der Meulen, Edwin**
**Wiener Strasse 60/2**
**A-8605 Kapfenberg(AT)**

(72) Erfinder: **van der Meulen, Edwin**
**Wiener Strasse 60/2**
**A-8605 Kapfenberg(AT)**

(74) Vertreter: **Hübscher, Helmut, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz(AT)**

(54) **Kraftstoffvorwärmer für Dieselmotoren.**

(57) Ein Kraftstoffvorwärmer für Dieselmotoren (1) weist einen von den Auspuffgasen des Dieselmotors (1) beaufschlagbaren, kraftstoffdurchflossenen Wärmetauscher (6) auf.

Um auf rationelle Weise eine wirkungsvolle Vorwärmung zu erreichen, nimmt der Wärmetauscher (6) zwei Kraftstoffleitungen (8a, 8b) für einen Kraftstoffvor- und -rücklauf (3a, 3b) auf.

*FIG.2*

EP 0 355 246 A1

## Kraftstoffvorwärmer für Dieselmotoren

Die Erfindung bezieht sich auf einen Kraftstoffvorwärmer für Dieselmotoren, mit einem von den Auspuffgasen des Dieselmotors beaufschlagbaren, kraftstoffdurchflossenen Wärmetauscher.

Um bei tiefen Temperaturen ein Versulzen des Dieselkraftstoffes und eine Paraffinabscheidung sicher zu verhindern, ist es bekannt, den Dieselkraftstoff auf seinem Weg vom Tank zur Einspritzpumpe über einen Wärmetauscher zu führen und vorzuwärmen. Bisher sind diese Wärmetauscher vor allem als elektrisch beheizbare Heizkammern ausgebildet, die aber einen zusätzlichen Energiebedarf mit sich bringen und einen entsprechenden Bau- und Regelungsaufwand erfordern. Außerdem wurde schon vorgeschlagen, auspuffgasbeaufschlagte Wärmetauscher zur Kraftstoffvorwärmung zu verwenden (DE-OS 31 44 554, US-PS 4 612 896), die sich wegen ihrer Wirtschaftlichkeit auch bereits durchaus bewährt haben. Alle bekannten Wärmetauscher können allerdings den Kraftstoff erst knapp vor der Einspritzpumpe erwärmen, was in extremeren Situationen unbefriedigend bleibt und zu Versorgungsschwierigkeiten führt.

Der Erfindung liegt daher die Aufgabe zugrunde, diese Mängel zu beseitigen und einen Kraftstoffvorwärmer der eingangs geschilderten Art zu schaffen, der sich durch seine besondere Vorwärmwirkung auszeichnet und auch bei Tiefsttemperaturen eine ordnungsgemäße Kraftstoffversorgung des Dieselmotors gewährleistet.

Die Erfindung löst diese Aufgabe dadurch, daß der Wärmetauscher zwei Kraftstoffleitungen für einen Kraftstoffvor- und -rücklauf aufnimmt. Dadurch läßt sich nicht nur der vom Tank zu den Einspritzdüsen fließende Kraftstoff vorwärmen, sondern auch der in Tank zurückge-führte Kraftstoffüberlauf von den Einspritzdüsen, so daß in den Tank gewärmter Kraftstoff fließt und es in äußerst effektvoller Weise zu einer Tankerwärmung kommt, die auch auf Fahrten bei Tiefsttemperaturen ein Verlegen der Kraftstoffwege sicher verhindert. Dabei ist durch die Ausnutzung der Abwärme aus den Auspuffgasen trotz dieser umfassenden Kraftstofferwärmung eine eigene Energiequelle unnötig und es genügt ein aufwandsarmer Wärmetauscher ohne Verkabelung, Thermostatschaltungen od. dgl. Es wird eine überaus rationelle Kraftstoffvorwärmung erreicht, die vor allem während der Fahrt wirkt und die Vorwärmung des Kraftstoffes auf etwa Einspritztemperatur erlaubt, so daß nicht nur ein Versulzen und eine Paraffinabscheidung sicher vermieden werden, sondern auch eine Verbesserung der Zerstäubung und damit der Verbrennung und nicht zuletzt eine Kraftstoffeinsparung möglich sind. Da durch entsprechende Kraftstoffzusätze der Kaltstart kaum Schwierigkeiten bereitet und erst nach einiger Zeit ein Verlegen der Kraftstoffleitungen, der Filter und Düsen durch das Versulzen und Ausparaffinieren zu befürchten wäre, bietet der auspuffbeaufschlagbare, die Kraftstoffvor- und -rückleitung erfassende Wärmetauscher eine echte Sicherheit vor einer Kraftstoffunterkühlung, wobei der Wärmetauscher praktisch an jeder geeigneten Stelle angeordnet sein kann und sich auch bestens zur Nachrüstung eines Dieselmotors eignet.

Nach einer vorteilhaften Ausgestaltung der Erfindung ist bei einem Wärmetauscher, der aus einem ein Auspuffrohr umschließenden Ringgehäuse besteht, das mit einem Wärmeträger gefüllt ist und eine um die Gehäuseachse gewundene Kraftstoffleitung aufnimmt, die eine Kraftstoffleitung koaxial von einer zweiten Kraftstoffleitung umgeben, so daß sich für die Vorwärmung des Vor-und Rücklaufes eine kompakte, leistungsfähige Einrichtung ergibt, di zudem billig herstellbar und einfach installierbar ist.

In der Zeichnung ist der Erfindungsgegenstand beispielsweise dargestellt, und zwar zeigen

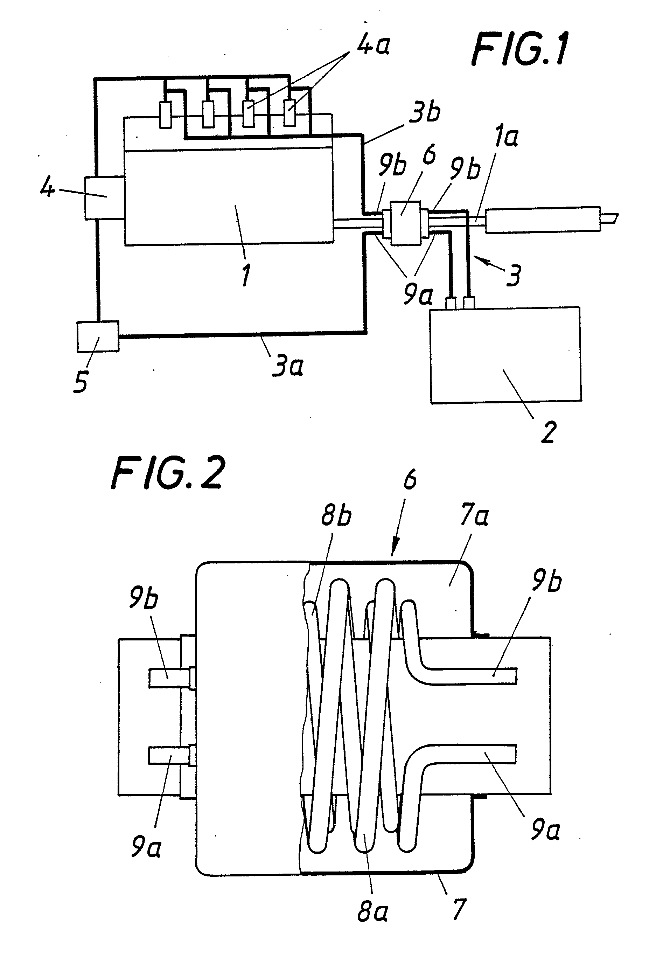

Fig. 1 ein Anlagenschema eines Dieselmotors mit erfindungsgemäßem Kraftstoffvorwärmer und

Fig. 2 den erfindungsgemäßen Kraftstoffvorwärmer in teilgeschnittener Ansicht größeren Maßstabes.

Zur Kraftstoffversorgung eines Dieselmotors 1 gibt es zumindest einen Kraftstofftank 2, der durch eine Ringleitung 3 mit der Einspritzpumpe 4 und den daran angeschlossenen Einspritzdüsen 4a verbunden ist, wobei der Kraftstoffvorlauf 3a über ein Filter 5 zur Ein spritzpumpe 4 und der Rücklauf 3b vom Überlauf der Einspritzdüsen 4a zurück in den Tank 2 führen. Um bei tiefen Außentemperaturen Betriebsstörungen dur Versulzen und Ausparaffinieren des Kraftstoffes zu vermeiden, ist in die Ringleitung 3 ein von den Auspuffgasen des Dieselmotors 1 beaufschlagbarer Wärmetauscher 6 eingebaut, der als Heizkammer zur Vorwärmung des Kraftstoffes dient.

Der Wärmetauscher 6 besteht aus einem geschlossenen Ringgehäuse 7, das ein Auspuffrohr 1a des Dieselmotors 1 umschließt und sich an geeigneter Stelle auf einfache Weise an diesem Rohr ansetzen läßt. Der Innenraum 7a diese Ringgehäuse 7 ist mit Öl gefüllt und nimmt zwei um die Ringgehäuseachse schraubenlinienförmig gewundene Kraftstoffleitungen 8a, 8b auf, von denen die eine 8a mit den Anschlüssen 9a in den Kraftstoffvorlauf 3a und die andere 8b mit ihren Anschlüssen 9b in den Kraftstoffrücklauf 3b eingebunden sind.

Die Abwärme der Motorabgase wird mit dem Wärmetauscher 6 zur Vorwärmung des Dieselkraftstoffes genutzt, wobei sowohl der Vorlauf 3a als auch der Rücklauf 3b beheizt werden, so daß es nicht nur zu einer Vorwärmung des dem Filter 5 und der Einspritzpumpe 4 zufließenden Kraftstoffes, sondern auch des in den Tank rückfließenden Kraftstoffes und damit des Tankes kommt. Über die Ölfüllung des Wärmetauschers 6 ergibt sich bei sicherer Kraftstofführung durch eigene Kraftstoffleitungen 8a, 8b eine gute Wärmeübertragung und auf rationelle Weise wird eine hochwirksame Kraftstoffvorwärmung gewährleistet.

## Ansprüche

1. Kraftstoffvorwärmer für Dieselmotoren, mit einem von den Auspuffgasen des Dieselmotors beaufschlagbaren, kraftstoffdurchflossenen Wärmetauscher, dadurch gekennzeichnet, daß der Wärmetauscher (6) zwei Kraftstoffleitungen (8a, 8b) für einen Kraftstoffvor- und -rücklauf (3a, 3b) aufnimmt.

2. Kraftstoffvorwärmer nach Anspruch 1, mit einem Wärmetauscher aus einem ein Auspuffrohr umschließenden Ringgehäuse, das mit einem Wärmeträger gefüllt ist und eine um die Gehäuseachse gewundene Kraftstoffleitung aufnimmt, dadurch gekennzeichnet, daß die eine Kraftstoffleitung (8b) koaxial von einer zweiten Kraftstoffleitung (8a) umgeben ist.

FIG.1

FIG.2

Europäisches Patentamt

**EUROPÄISCHER RECHERCHENBERICHT**

Nummer der Anmeldung

EP 88 89 0216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 326 492 (LEIBRAND) <br> * Spalte 4, Zeile 5 - Spalte 6, Zeile 20; Figuren 1-4 * <br> ----- | 1,2 | F 02 M 31/16 |

**RECHERCHIERTE SACHGEBIETE (Int. Cl.4)**

F 02 M

Der vorliegende Recherchenbericht wurde für alle Patentansprüche erstellt

| Recherchenort | Abschlußdatum der Recherche | Prüfer |
|---|---|---|
| DEN HAAG | 24-04-1989 | FRIDEN C.M. |